Europäisches Patentamt

(19) European Patent Office

Office européen des brevets

(11) Numéro de publication : **0 112 211**
**B1**

(12) **FASCICULE DE BREVET EUROPÉEN**

(45) Date de publication du fascicule du brevet :
30.09.87

(21) Numéro de dépôt : **83402251.9**

(22) Date de dépôt : **22.11.83**

(51) Int. Cl.⁴ : **H 01 L 33/00**, H 01 L 31/02

(51) Int. Cl.⁴ : **H 01 L 33/00**, H 01 L 31/02

(54) **Procédé d'alignement d'un dispositif optoélectronique.**

(30) Priorité : **30.11.82 FR 8220043**

(43) Date de publication de la demande :
**27.06.84 Bulletin 84/26**

(45) Mention de la délivrance du brevet :
**30.09.87 Bulletin 87/40**

(84) Etats contractants désignés :
**DE GB NL SE**

(56) Documents cités :
**EP-A- 0 021 473**
**DE-A- 2 930 317**
**FR-A- 2 372 444**
**GB-A- 2 026 194**
**US-A- 4 357 072**
**PATENTS ABSTRACTS OF JAPAN, vol. 4, no. 51, 17 avril 1980, page 125 P 7**

(73) Titulaire : **THOMSON-CSF**
**173, Boulevard Haussmann**
**F-75379 Paris Cédex 08 (FR)**

(72) Inventeur : **Henry, Raymond**
**THOMSON-CSF SCPI 173, bld Haussmann**
**F-75379 Paris Cedex 08 (FR)**
Inventeur : **Carballes, Jean-Claude**
**THOMSON-CSF SCPI 173, bld Haussmann**
**F-75379 Paris Cedex 08 (FR)**
Inventeur : **Duda, Eugène**
**THOMSON-CSF SCPI 173, bld Haussmann**
**F-75379 Paris Cedex 08 (FR)**
Inventeur : **Grard, Emmanuel**
**THOMSON-CSF SCPI 173, bld Haussmann**
**F-75379 Paris Cedex 08 (FR)**

(74) Mandataire : **Taboureau, James et al**
**THOMSON-CSF SCPI 19, avenue de Messine**
**F-75008 Paris (FR)**

## Description

La présente invention concerne un procédé d'alignement d'un dispositif semiconducteur optoélectronique avec une fibre optique, afin de réaliser une tête optique, c'est-à-dire un composant optoélectronique, qui est un ensemble contenu dans un boîtier fermé étanche et servant d'interface entre une partie électronique et une partie optique. Le procédé selon l'invention est dynamique, c'est-à-dire que le dispositif semiconducteur et la fibre fonctionnent pendant leur positionnement respectif. L'invention concerne les têtes optiques alignées selon le procédé de l'invention.

Un composant optoélectronique, dit tête optique, comprend à l'intérieur d'un boîtier de protection :

toujours une pastille semiconductrice, émettrice ou réceptrice de lumière, et un conducteur de lumière

souvent des éléments de contre-réaction, et de l'électronique telle qu'alimentation ou régulation, ou protection et éventuellement une électronique de commande.

La pastille semiconductrice peut être une diode laser, une diode électroluminescente DEL pour l'émission, une diode PIN par exemple pour la réception. Le conducteur de lumière comporte une fibre optique et souvent une microoptique de focalisation sous forme par exemple d'une lentille en bout de fibre optique. Les éléments de contre réaction inclus dans le boîtier peuvent être des éléments de régulation de la lumière émise, ou de régulation de la température par exemple.

Les composants optoélectroniques susceptibles d'être alignés selon le procédé de l'invention sont soit des dispositifs de réception dans lesquels une fibre optique amène la lumière jusque sur une photodiode ou sur un phototransistor, soit des dispositifs d'émission dans lesquels une DEL ou un laser semiconducteur émet de la lumière vers une fibre optique.

Dans les deux cas, le problème le plus ardu est celui qui consiste à optimiser une tête optique, car les puissances lumineuses en jeu sont très faibles — 1 à 20 milliwatts maximum sauf pour un fonctionnement pulsé — et les dimensions des objets à positionner très petites — 50/125 µm pour une fibre optique, 40 à 200 µm pour un semiconducteur optoélectronique (il s'agit de la surface sensible) — avec une précision de plus ou moins 1 à 10 µm. Un décalage de 3 µm dans l'alignement d'une fibre optique sur un laser produit une perte d'énergie de 1 décibel.

Les moyens de réglage et d'alignement mis en œuvre jusqu'à présent utilisent soit un pré-réglage mécanique, la fibre optique étant positionnée dans une gorge creusée dans le support du dispositif semiconducteur, soit un réglage dynamique, au cours duquel une goutte de colle photopolymérisable, supportée par la fibre optique, est brutalement solidifiée par un éclair de lumière ultraviolette au moment où la fibre optique est bien positionnée.

Des exemples de réglage et alignement dynamique sont donnés dans le document « Patent Abstracts of Japan » vol. 4, n° 51, 17 avril 1980, page 125 P7 ou dans le document GB-A-2 026 194. Selon le premier document cité, les pièces en mouvement relatif sont ajustées, de sorte que seul un coulissement le long de l'axe de la fibre optique est possible, permettant le réglage de la distance entre l'extrémité de la fibre optique et la diode optoélectronique. Le second document montre des pièces constitutives usinées avec un certain jeu entre elles, permettant alors le positionnement de la fibre selon trois revendications orthogonales. Mais la colle utilisée pour figer la configuration est maintenue en place, pendant le réglage, par capillarité entre deux pièces dont l'une est solidaire de la fibre et l'autre est solidaire de la diode. Il n'y a aucun contenant pour la colle.

Le procédé selon l'invention met en œuvre un boîtier de tête optique séparé en au moins deux parties métalliques — sans compter les parties annexes mobiles telles qu'un couvercle de fermeture ou un connecteur de raccordement par exemple —. Sur une première partie du boîtier est fixé le dispositif semiconducteur optoélectronique, et si nécessaire l'électronique associée ; sur l'autre partie est fixée la fibre optique. L'une des deux parties comporte des moyens pour contenir de la soudure en fusion, tels qu'une gorge annulaire, ou deux ou trois cuvettes. L'autre partie comporte des moyens métalliques qui plongent dans le bain de soudure en fusion. La largeur et la profondeur du bain de soudure en fusion sont suffisants pour permettre un débattement de la première partie du boîtier par rapport à la seconde partie du boîtier, selon trois axes orthogonaux : ceci permet le réglage de la fibre optique par rapport au semiconducteur, au cours d'un positionnement dynamique. Lorsque la position optimale de la fibre par rapport au semiconducteur est atteinte, la soudure est refroidie et solidifiée.

De façon plus précise, l'invention concerne un procédé d'alignement d'un dispositif optoélectronique, comprenant :

un procédé d'alignement d'un dispositif optoélectronique, comprenant :

un composant semiconducteur 2, émetteur ou récepteur de lumière, fixé sur un premier support mécanique 12

un composant optique 4, transmetteur de lumière, fixé sur un second support mécanique 13, indépendant du premier support 12

une pièce de centrage 16, solidaire de l'un des deux supports 12, procédé d'alignement selon lequel, au cours d'un réglage dynamique, en fonctionnement, les positions relatives optimales des deux composants 2 et 4 sont obtenues par déplacement selon trois degrés de liberté des deux supports mécaniques 12, 13 l'un par rapport à l'autre, ce procédé étant caractérisé en ce que la matière durcissable 15 supportée par au moins un contenant 14 permettant trois degrés de liberté à la pièce de centrage 16, la matière durcissable 15 étant figée lorsque les positions des deux composants semiconducteur 2 et optique 4 sont optimales.

L'invention sera mieux comprise par la description de quelques exemples de réalisation, cette description s'appuyant sur les figures jointes en annexe qui représentent :

figure 1 vue en plan d'une tête optique laser selon l'art connu

figure 2 vue de trois quarts d'un dispositif de positionnement de fibres optiques par rapport à un laser selon l'art connu

figure 3 vue en coupe d'une tête optique mettant en œuvre le procédé selon l'invention

figure 4 tête optique mettant en œuvre le procédé selon l'invention, dans une seconde forme de réalisation

figure 5 un connecteur pour fibres optiques adapté aux procédés selon l'invention

figure 6 une variante du procédé selon l'invention, correspondant à la réalisation de la figure 4.

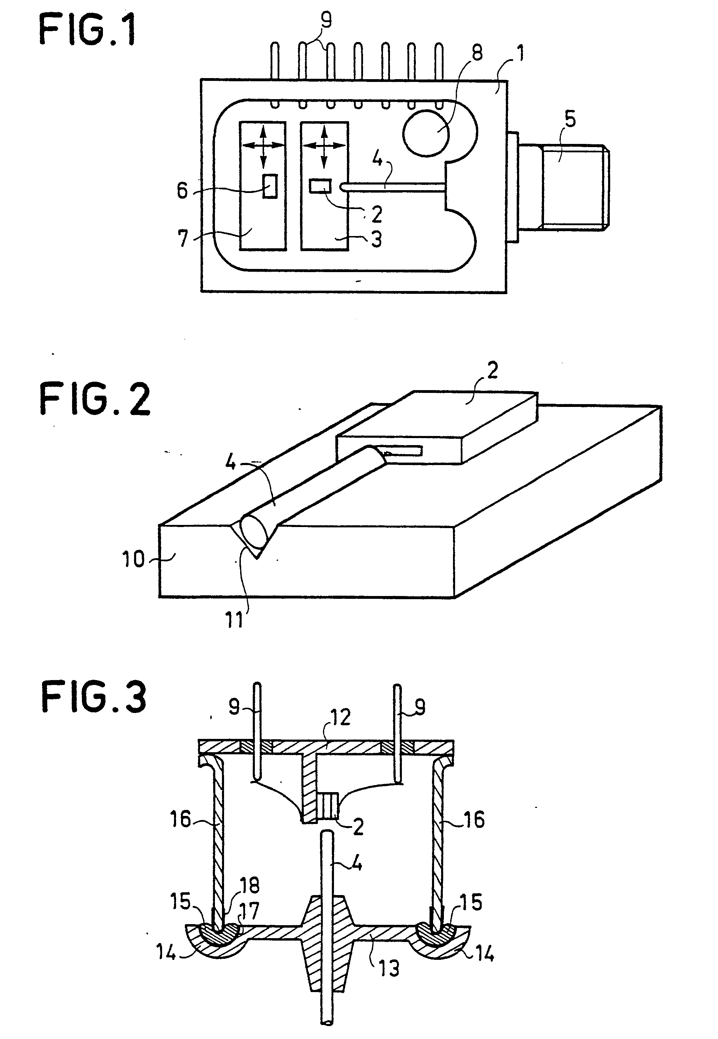

La figure 1 représente une vue en coupe d'une tête optique selon l'art connu, ou plus exactement une tête optique dans un boîtier dont le couvercle a été ôté.

Cette tête optique est composée d'un boîtier métallique 1, à l'intérieur duquel est fixé un semiconducteur laser 2, supporté par une pièce 3 qui permet le réglage selon deux directions à l'intérieur du boîtier 1. Le semiconducteur 2 est aligné par rapport à un morceau de fibre optique 4, qui sert d'interface entre l'intérieur du boîtier et l'extérieur du boîtier, par l'intermédiaire d'un connecteur optique 5. La tête optique comprend également un dispositif de contre réaction 6, qui est par exemple une diode PIN, laquelle contrôle la lumière émise par la face arrière du dispositif semiconducteur 2. La diode PIN 6 est elle aussi supportée par une pièce 7 qui permet son réglage selon deux directions à l'intérieur du boîtier. Dans certains cas, la tête optique comprend enfin un dispositif 8, qui est souvent un transistor dont la jonction sert de thermomètre pour le contrôle de la température à l'intérieur du boîtier de la tête optique. Des connections externes 9 supportées par des perles de verre, traversent l'épaisseur de la paroi du boîtier et amènent ou extraient les différents signaux nécessaires au fonctionnement de la tête optique.

Un problème important est l'alignement, ou le réglage du conducteur de lumière 4 vis-à-vis de la pastille semiconductrice 2. Différents cas sont possibles.

Si la tête optique est une tête de réception, le problème est le moins délicat car le diamètre de la fibre 4 est inférieur à celui de la surface sensible de la diode PIN 2, qui reçoit la lumière par une face principale du cristal semiconducteur : 50 μm pour la fibre optique, 60 à 200 μm pour la diode. Cependant, comme la surface sensible de la diode dans le cas de signaux de très haute fréquence est la plus petite possible pour n'avoir qu'une faible capacité, il est nécessaire dans ce cas de positionner la fibre 4 par rapport à la diode 2 avec une précision de ± 10 μm.

Si la tête optique est une tête d'émission munie d'une diode électroluminescente, dite DEL, une précision de réglage de ± 5 μm est nécessaire pour optimiser l'alignement d'une diode de 50 μm de diamètre avec une fibre de même diamètre.

Enfin, si la tête optique est une tête d'émission munie d'une diode laser — qui est le cas de la figure 1 — la diode émet la lumière par une bande d'environ 4 μm de large sur 0,2 μm d'épaisseur, cette bande étant apparente sur une face latérale du cristal semiconducteur. Une précision d'alignement de ± 1 μm est alors nécessaire.

On voit donc qu'il est nécessaire d'obtenir un positionnement des différents constituants d'une tête optique à plus ou moins 1 μm près, ce qui du point de vue mécanique est déjà assez délicat, mais qui de plus est faussé lorsque la tête optique fonctionne, en raison des différentes dilatations dues à l'échauffement des composants. C'est pourquoi le réglage dans le cas d'un laser étant le plus délicat et celui qui nécessite la plus haute précision, la suite de l'exposé de l'invention s'appuiera sur ce cas d'un dispositif optoélectronique qui est un laser, sans pour autant que l'invention ne soit limitée à ce seul cas.

La figure 2 représente un dispositif de positionnement d'une fibre optique par rapport à un laser, selon l'art connu.

Ce dispositif est réduit sur le dessin aux seules pièces nécessaires à sa compréhension.

Selon ce procédé de réglage, la pastille d'un laser 2 est supportée par une pièce 10, sur laquelle elle est soudée par exemple à l'indium. La fibre optique 4 est supportée par le bloc 10 de préférence en silicium dans lequel a été creusée une gorge en V 11, par des moyens chimiques adaptés au décapage du silicium, et qui permettent d'obtenir une très grande précision dans la gravure de la rainure en V 11. Le support du laser et de la fibre optique 4 est supporté par une même embase, non représentée ici sur la figure, et il est possible de déplacer la pastille de laser 2 avant soudure à l'indium selon deux axes dans un plan horizontal sur la face de la pièce 10, et après soudure de déplacer la fibre optique 4 selon un axe dans un plan horizontal. Lorsque la fibre optique 4 est bien positionnée par rapport au ruban émetteur de laser, elle est fixée au moyen d'une goutte de colle photopolymérisable, qui est brutalement solidifiée par l'intermédiaire d'un éclair en ultraviolet par exemple.

Ce procédé d'alignement a l'avantage d'être simple puisqu'il repose sur l'alignement purement mécanique de deux pièces, le laser et la fibre optique, sans qu'il soit nécessaire de les faire fonctionner ensemble pour les optimiser. Mais par contre, il nécessite une très grande précision dans la manipulation des pièces, une très grande fiabilité dans la fabrication des pièces en particulier le support 10 avec la rainure en V 11, pour que toutes ces pièces soient réalisées avec une précision meilleure que le micron. Ce procédé a par contre l'inconvénient d'être assez coûteux puisqu'il nécessite que les pièces soient parfaitement usinées.

La figure 3 représente une tête optique mettant en œuvre le procédé d'alignement selon l'invention. La structure de la tête optique est adaptée à une telle mise en œuvre, et il est remarquable que le procédé ne nécessite aucune précision importante sur l'usinage des pièces constituantes.

La tête optique est constituée de deux parties principales. La première partie est le support de la diode laser 2, par une pièce métallique 12, convenablement constituée et dotée de connexions externes 9 isolées par perles de verre, pour l'alimentation de la diode laser. La seconde partie est le support de la fibre optique 4, au moyen d'une pièce de forme convenable 13.

Parmi les deux pièces principales 12 et 13, l'une, qui dans le cas présent de figure est la pièce 13 qui porte la fibre optique, comporte une rainure 14 formant gouttière, qui est selon la forme du boîtier ronde ou rectangulaire, et cette rainure est remplie de soudure 15. Les dimensions de la rainure sont suffisamment grandes pour correspondre à un débattement selon les trois axes d'un trièdre de référence d'une pièce par rapport à l'autre, dans la limite des courses nécessaires à l'alignement de la fibre optique sur le laser. L'autre pièce, qui est donc dans le cas de figure présente la pièce 12, comporte une partie métallique 16 dont le dessin correspond au dessin de la gouttière 14, cette partie métallique 16 plongeant dans la soudure 15 : cette partie métallique sera appelée pièce de centrage.

Le procédé d'alignement de la fibre par rapport au laser est donc le suivant. La pièce 12, sur laquelle la pastille de laser 2 est soudée par exemple à l'indium dont la température de fusion est $T_f = 156°$, est maintenue fixe et éventuellement refroidie pour assurer un meilleur fonctionnement du laser. La pièce 13, qui porte la fibre optique, est au contraire chauffée de façon à ce que la soudure 15 contenue dans la gouttière 14 soit amenée à sa température de fusion. La pastille de laser 2 étant amenée sous polarisation émet de la lumière, et un appareil de micromanipulation, qui n'est pas représenté sur la figure car il sort du domaine de l'invention, déplace la fibre optique 4 et son support 13 selon trois axes dans l'espace, jusqu'à ce que la fibre optique soit dans une position optimale par rapport au laser. Pour cela, la lumière du laser, recueillie par la fibre optique à l'intérieur du boîtier, est reçue et analysée à l'extérieur du boîtier. Une électronique d'acquisition de données, qui peut comprendre un microprocesseur qui commande les mouvements de la platine 13 par rapport à la platine 12, optimise ces déplacements et les arrête lorsque la lumière reçue à l'extrémité extérieure de la fibre 4 est optimale. Lorsque le réglage dynamique a obtenu l'optimisation du couplage laser-fibre, la platine 13 est refroidie et la soudure 15 qui était à l'état de fusion se fige, fixant ainsi les positions relatives du support 12 du laser par rapport au support 13 de la fibre.

Le chauffage de la soudure 15 peut être obtenu par une spire chauffante, ou par une pièce chauffée et maintenue en contact avec la gouttière 14 qui contient la soudure, ou encore par le passage d'un courant électrique dans deux pièces en matériaux résistants tels que le graphite, ces deux pièces enserrant la gouttière.

Le fait que le réglage se fait en dynamique, et que l'acquisition des données soit faite par des moyens perfectionnés tels que microprocesseurs par exemple permet de tenir compte de la température à laquelle les différentes pièces 12, 13 et 16 sont amenées, et de fixer l'embase de la fibre par rapport à l'embase du laser en tenant compte des dilatations réelles au cours de cet alignement, par rapport aux dilatations qui auront lieu en fonctionnement normal de la tête optique. A ce titre, les pièces sont de préférence de révolution, car au retour à la température ambiante il n'y a pas de modification du réglage dans le plan de l'embase 13 puisque la pièce est de révolution. Par contre, on peut tenir compte selon l'axe de la fibre optique ou encore, ce qui revient au même, selon un axe perpendiculaire à cette embase, de la légère dilatation $\Delta Z$ de la soudure 15 obtenue entre la température de fusion et la température ambiante 25°.

Le déplacement des objets les uns par rapport aux autres, c'est-à-dire de la platine 12 par rapport à la platine 13, sont très petits, de l'ordre de la centaine de microns s'il faut obtenir un réglage à un micron près. Mais par ailleurs, les soudures utilisées classiquement ont tendance à mouiller certains métaux, et pour mieux localiser la soudure dans la gouttière 14 et à l'extrémité de la pièce 16, sans que la soudure ne mouille trop ces pièces, il est bon de dorer localement les extrémités des pièces en regard. C'est ainsi que sur la figure 3 la gouttière 14 est dorée à l'intérieur sur une surface 17 tandis que l'extrémité de la pièce 16 est dorée sur une surface 18, les pièces en regard 17 et 18 étant seules mouillées par la soudure.

La soudure utilisée est de préférence un alliage d'étain dit soudure tendre telle que Sn-Pb-Ag ou Sn-In-Ag ou encore plus simplement Pb-In, de manière à ce que le point de fusion de la soudure soit assez bas et compris de préférence entre 120 et 200°. Ce point de fusion bas est nécessaire pour ne pas trop chauffer d'une part la fibre optique, d'autre part la pastille du laser 2 qui est fixée sur son embase 12 par de l'indium dont la température de fusion est 156°.

On peut encore remplacer la soudure par une matière du type des résines thermo-durcissables, ou plus exactement polymérisables sous l'effet d'un rayonnement tel qu'un rayonnement ultraviolet ou un rayonnement X. Dans ce cas, la gouttière 14 est remplie de résine polymérisable, le réglage dynamique de la fibre optique par rapport au laser est mis en œuvre et lorsque l'optimum est atteint un éclair ultraviolet ou une émission de rayons X polymérise brutalement, en un temps compris entre 1 et 5 secondes maximum, la résine qui se trouve dans la gouttière et fixe ainsi les deux pièces l'une par rapport à l'autre. Cependant, l'utilisation de soudures à base de métaux est préférable car elle est plus apte à assurer une herméticité durable et la soudure a un coefficient de dilatation plus faible que les résines photopolymérisables.

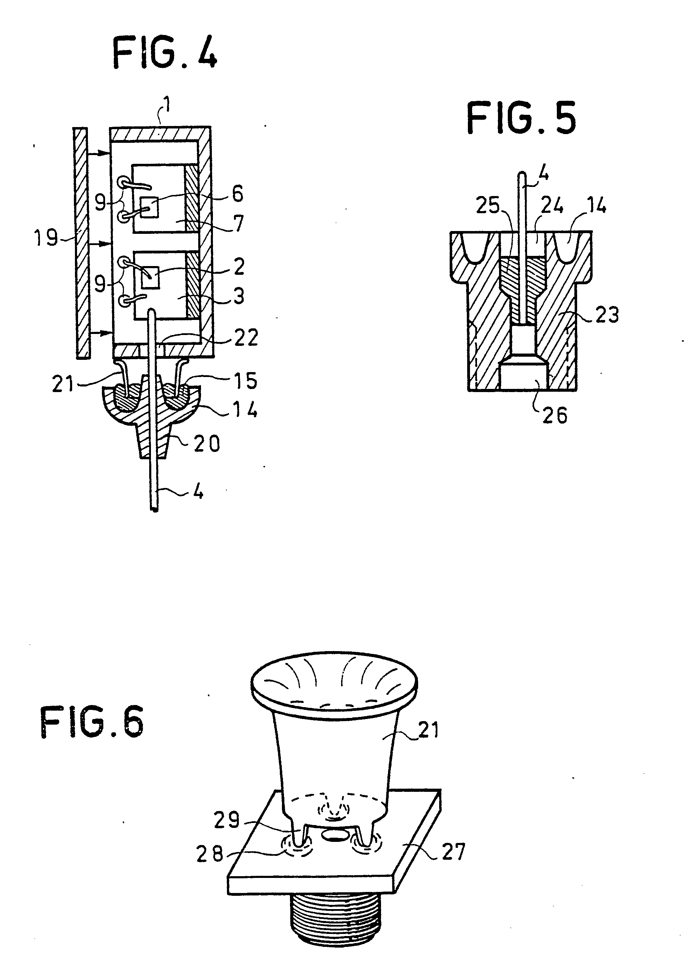

La figure 3 représente le cas d'une tête optique qui une fois que la fibre et le laser sont alignés, est complètement close. Cependant, dans certains cas, on préfère d'abord aligner la fibre et le laser, puis ensuite pouvoir intervenir pour un réglage électrique, par exemple sur l'électronique qui se trouve à l'intérieur du boîtier : dans ce cas, il est préférable d'opérer en deux temps, d'abord aligner les composants optiques, puis fermer de façon étanche le montage mécanique. C'est ce que représente la figure 4.

Elle reprend l'exemple de la tête optique de la Figure 1 selon l'art connu, mais au lieu que le réglage de la fibre par rapport au laser se fasse par un déplacement mécanique du support 3 du laser sur le fond de boîtier 1, le réglage se fait dans le cas de la figure 4 selon le procédé de l'invention.

La tête optique comporte donc, à l'intérieur d'un boîtier métallique 1 et de son couvercle 19, qui sur cette figure n'est pas encore fixé sur le fond de boîtier 1, d'une part une diode laser 2 supportée par une pièce métallique 3 et d'autre part une diode de contrôle 6 supportée par une pièce métallique 7. Les deux diodes sont alimentées par des connexions externes 9.

Par ailleurs, la fibre optique 4 est fixée, par une résine par exemple, ou de préférence une soudure à l'intérieur d'une pièce 20 qui comporte une gouttière 14 dans laquelle sera rapportée, le moment venu, de la soudure 15. Le boîtier 1 comportant le laser 2 et la pièce 20 supportant la fibre 4 sont alignés l'un par rapport à l'autre au moyen d'une pièce de centrage 21 qui est fixée à l'extérieur du boîtier 1, dans une position telle que la fibre optique soit dans l'axe du faisceau lumineux émis par le laser 2. Cette pièce 21 peut être de section carrée, mais, comme il a été dit, il est préférable qu'elle soit de section circulaire. En outre, et bien évidemment, un orifice 22 pratiqué dans le boîtier 1 permet à la fibre optique de traverser ce boîtier pour s'approcher du laser 2.

Le réglage et l'alignement de la fibre optique 4 par rapport au laser 2 se font exactement de la même façon que dans le cas de la figure 3. C'est-à-dire que la soudure 15 étant amenée à une température au-dessus de sa température de fusion, et le boîtier 1 étant refroidi pour éviter que le laser ne travaille au-dessus de 70°, le réglage dynamique permet de déplacer la pièce 20 selon trois axes orthogonaux par rapport au boîtier, c'est-à-dire par rapport au laser. Lorsque le réglage optimum est atteint, la soudure 15 contenue dans la gouttière 14 est refroidie et la fibre se trouve alignée avec le laser.

Sur la figure 4, on peut supposer que la fibre 4 est une fibre intermédiaire de l'ordre de 1 à 2 m de longueur, qui fait la liaison à l'intérieur d'un système électronique entre la tête optique et un autre composant. Cependant, la tête optique peut comporter, comme c'était le cas sur la figure 1, une sortie au moyen d'un connecteur optique.

La figure 5 représente un connecteur pour fibres optiques adapté au procédé d'alignement selon l'invention. Ce connecteur est essentiellement composé d'un corps métallique fileté 23 à l'intérieur duquel est percé un logement 24. Dans ce logement 24, vient prendre place l'embout 25 d'une fibre optique 4 : ce type d'embout est connu et consiste en une douille métallique légère à l'intérieur de laquelle la fibre optique 4 est immobilisée par une résine thermo-durcissable. Une seconde fibre optique comportant un embout identique viendra dans le logement 26 qui, à l'intérieur du corps 23 du connecteur, est aligné avec le logement 24.

La particularité de ce connecteur pour fibres optiques est qu'il comporte une gouttière 14, sur sa face en regard avec le boîtier de tête optique, cette gouttière 14 étant destinée à être le moment venu remplie de soudure 15.

Les moyens de centrage et d'alignement qui ont été cités jusqu'à présent sont constitués d'une unique gouttière 14 remplie de soudure en fusion et d'une unique pièce métallique 16 sur la figure 3 ou 21 sur la figure 4, l'unique pièce métallique plongeant à l'intérieur de la soudure contenue dans l'unique gouttière. L'unicité de ces moyens n'est pas obligatoire et la figure 6 donne un exemple de variante au procédé d'alignement selon l'invention.

La figure 6 reprend un détail de la figure 4, et correspond à l'assemblage de la pièce 20 et de la pièce de centrage 21. Mais tandis que la pièce 20 comportait sur la figure 4 une unique gouttière 14, la pièce 27 qui peut être un connecteur optique comporte sur la figure 6 une pluralité de cuvettes 28 à l'intérieur desquelles plongent des ergots 29 portés par la pièce 21. Les cuvettes 28 sont remplies de soudure amenée à fusion pour l'opération d'alignement. Il peut y avoir deux cuvettes 28 et deux ergots 29 correspondants, mais ce type de fixation peut donner une certaine rotation du connecteur 27 par rapport au boîtier 1, c'est pourquoi il est préférable qu'il y ait au minimum 3 cuvettes 28 et 3 ergots 29 correspondants de façon à ce que le boîtier et le connecteur soient fixés sans rotation possible de l'un par rapport à l'autre. Lorsque la pièce de centrage 21 est parfaitement centrée par rapport au connecteur 27, l'étanchéité du boîtier de tête optique peut être achevée en complétant la soudure entre les deux pièces 21 et 27 au moyen d'une seconde soudure, dont la température de fusion est plus basse que celle de la soudure qui remplit les cuvettes 28 de façon à éviter une nouvelle fusion et un décentrage. L'opération d'étanchéité peut également être effectuée au moyen d'un joint de colle.

Le procédé d'alignement d'une fibre optique par rapport à un semiconducteur optoélectronique, selon l'invention, permet donc de réaliser des têtes optiques parfaitement alignées à partir de pièces et de composants mécaniques qui ne sont pas usinés avec une très grande précision. Toute la précision de l'alignement repose sur l'appareil de réglage dynamique qui capte la lumière transmise par la fibre optique, et elle repose également sur le micromanipulateur qui déplace l'une des deux pièces par rapport à l'autre. Le procédé selon l'invention constitue donc un gain appréciable sur le prix de revient d'une tête optique car si le réglage dynamique n'est pas diminué dans le temps, et correspond à d'autres types de réglage dynamique avec d'autres types de têtes optiques, du moins les pièces n'ont elles pas besoin d'être usinées avec grande précision, ce qui est toujours un facteur appréciable du point de vue industriel. De plus le réglage en dynamique est aisément automatisable.

L'invention a été exposée en s'appuyant sur le cas d'une fibre optique et d'une diode laser mais comme il a été dit elle concerne de façon plus générale l'alignement d'un composant électronique optique, c'est-à-dire soit émetteur soit récepteur de lumière et d'un composant optique qui est plus particulièrement une fibre optique mais pourrait être un autre dispositif à une échelle moindre que celle des fibres optiques. L'invention est précisée par les revendications suivantes.

## Revendications

1. Procédé d'alignement d'un dispositif optoélectronique, comprenant :

un composant semiconducteur (2), émetteur ou récepteur de lumière, fixé sur un premier support mécanique (12)

un composant optique (4), transmetteur de lumière fixé sur un second support mécanique (13), indépendant du premier support (12)

une pièce de centrage (16), solidaire de l'un des deux supports (12), procédé d'alignement selon lequel, au cours d'un réglage dynamique, en fonctionnement, les positions relatives optimales des deux composants (2 et 4) sont obtenues par déplacement selon trois degrés de liberté des deux supports mécaniques (12, 13) l'un par rapport à l'autre, ce procédé étant caractérisé en ce que la pièce de centrage (16) se déplace librement dans une matière durcissable (15) supportée par au moins un contenant (14), formé dans l'autre support (13), le volume du contenant (14) permettant trois degrés de liberté à la pièce de centrage (16), la matière durcissable (15) étant figée lorsque les positions des deux composants semiconducteur (2) et optique (4) sont optimales.

2. Procédé d'alignement selon la revendication 1, caractérisé en ce que la pièce de centrage (16) est de forme tubulaire, et en ce que le contenant (14) de la matière durcissable (15) est une gouttière, de forme appropriée à celle de la pièce de centrage (16) dont elle enveloppe l'extrémité.

3. Procédé d'alignement selon la revendication 1, caractérisé en ce que la pièce de centrage (21) solidaire d'un premier support est de forme tubulaire, se terminant à une extrémité par une pluralité d'ergots (29), et en ce que le contenant de la matière durcissable (15) consiste en une pluralité de cuvettes (28), correspondant en nombre et en position aux ergots (29), les cuvettes (28) étant creusées dans un second support.

4. Procédé d'alignement selon la revendication 1, caractérisé en ce que la matière durcissable (15) est une soudure tendre, choisie parmi Sn-Pb-Ag, Sn-In-Ag, Pb-In ou In pur.

5. Procédé d'alignement selon la revendication 1, caractérisé en ce que la matière durcissable (15) est un polymère photodurcissable par éclair UV ou par rayonnement ionisant.

6. Procédé d'alignement selon la revendication 1, caractérisé en ce que la pièce de centrage (16) est solidaire du composant semiconducteur (2) par l'intermédiaire d'un premier support (12) et en ce que le contenant (14) de matière durcissable (15) est solidaire du composant optique (4) par l'intermédiaire d'un second support (13).

7. Procédé d'alignement selon la revendication 1, caractérisé en ce que la pièce de centrage (16) est solidaire du composant optique (4) par l'intermédiaire d'un premier support (13) et en ce que le contenant (14) de matière durcissable (15) est solidaire du composant semiconducteur (2) par l'intermédiaire d'un second support (12).

8. Procédé d'alignement selon la revendication 1, caractérisé en ce que le composant semiconducteur (2) est choisi parmi : diode laser ou diode électroluminescente ou diode PIN réceptrice de lumière.

9. Procédé d'alignement selon la revendication 1, caractérisé en ce que le composant optique (4) est une fibre optique.

## Claims

1. A method of aligning an optoelectronic device comprising :

a semiconductor component (2) which emits or receives light and which is fixed to a first mechanical support (12),

an optical component (4) which transmits light and which is fixed to a second mechanical support (13) independent from the first support (12),

a centering piece (16) fixed to one of said supports (12), wherein, during a dynamic adjustment step under operation conditions, the relative optimum positions of the two components (2 and 4) are obtained by mutually displacing the two mechanical supports (12, 13) according to three degrees of liberty, characterized in that the centering piece (16) moves freely in a hardenable material (15) held by at least one recipient (14) which is formed in the other support (13), the volume of the recipient (14) allowing three degrees of liberty to the centering piece (16), the hardenable material (15) being annealed when the positions of the two components, the semiconductor and the optical component (2, 4), are optimum positions.

2. An alignment method according to claim 1, characterized in that the centering piece (16) has a tubular shape and that the recipient (14) for the hardenable material (15) is a groove of a shape adapted to that of the centering piece (16), the end of which it envelopes.

3. An alignment method according to claim 1, characterized in that the centering piece (21) attached to a first support is of a tubular shape and ends in a plurality of pins (29), and that the recipient for the hardenable material (15) consists in a plurality of bowls (28), the number and positions of which correspond to that of the pins (29), the bowls being provided in the second support.

4. An alignment method according to claim 1, characterized in that the hardenable material (15) is a smooth soldering material selected among Sn-Pb-Ag, Sn-In-Ag, Pb-In or pure In.

5. An alignment method according to claim 1, characterized in that the hardenable material (15) is a polymer which is photohardenable by an ultraviolet flash or by a ionising radiation.

6. An alignment method according to claim 1, characterized in that the centering piece (16) is fixed to the semiconductor component (2) via a first support (12), and that the recipient (14) for the hardenable material (15) is fixed to the optical component (4) via a second support (13).

7. An alignment method according to claim 1, characterized in that the centering piece (16) is fixed to the optical component (4) via a first support (13), and that the recipient (14) for the hardenable material (15) is fixed to the semiconductor component (2) via a second support (12).

8. An alignment method according to claim 1, characterized in that the semiconductor component (2) is either a laser diode or an electroluminescent diode or a PIN diode which receives light.

9. An alignment method according to claim 1, characterized in that the optical component (4) is an optical fiber.

**Patentansprüche**

1. Verfahren zum Ausrichten einer optoelektronischen Vorrichtung,

mit einem Halbleiterbauteil (2), das Licht aussendet oder empfängt und auf einem ersten mechanischen Träger (12) befestigt ist,

mit einem optischen Bauteil (4), das Licht überträgt und auf einem zweiten mechanischen Träger (13) befestigt ist, der vom ersten Träger (12) unabhängig ist,

mit einem Zentrierstück (16), das an einem der beiden Träger (12) befestigt ist, wobei gemäß diesem Ausrichtverfahren während einer dynamischen Abstimmung im Betrieb die relativen Optimalstellungen der beiden Bauteile (2 und 4) durch gegenseitige Verschiebung der beiden mechanischen Träger (12, 13) gemäß drei Freiheitsgraden erreicht werden, dadurch gekennzeichnet, daß das Zentrierstück (16) sich frei in einem härtbaren Material (15) verschiebt, das von mindestens einem im anderen Träger (13) ausgebildeten Behältnis (14) gebildet wird, wobei das Volumen dieses Behältnisses (14) dem Zentrierstück (16) drei Freiheitsgrade erlaubt und man das härtbare Material (15) erstarren läßt, wenn die Stellungen des halbleitenden (2) und des optischen (4) Bauteils optimal sind.

2. Ausrichtverfahren nach Anspruch 1, dadurch gekennzeichnet, daß das Zentrierstück (16) rohrförmig ist und daß das Behältnis (14) für das härtbare Material (15) eine Rinne ist, deren Form der des Zentrierstücks (16), dessen Ende sie umgibt, angepaßt ist.

3. Ausrichtverfahren nach Anspruch 1, dadurch gekennzeichnet, daß das Zentrierstück (21), das am ersten Träger befestigt ist, die Form eines Rohres besitzt, das an einem Ende eine Vielzahl von Zapfen (29) aufweist, und daß das Behältnis aus härtbarem Material (15) aus einer Vielzahl von Mulden (28) besteht, die in Anzahl und Lage den Zapfen (29) entsprechen und aus dem zweiten Träger ausgehöhlt sind.

4. Ausrichtverfahren nach Anspruch 1, dadurch gekennzeichnet, daß das härtbare Material (15) ein weiches Lötmaterial ist, das aus Sn-Pb-Ag, Sn-In-Ag, Pb-In und reinem In ausgewählt ist.

5. Ausrichtverfahren nach Anspruch 1, dadurch gekennzeichnet, daß das härtbare Material (15) aus einem mit einem UV-Blitz oder einer ionisierenden Strahlung fotohärtbaren Polymermaterial besteht.

6. Ausrichtverfahren nach Anspruch 1, dadurch gekennzeichnet, daß das Zentrierstück (16) mit dem Halbleiterbauteil (2) über einen ersten Träger (12) verbunden ist, und daß das Behältnis (14) für das härtbare Material (15) mit dem optischen Bauteil (4) über einen zweiten Träger (13) verbunden ist.

7. Ausrichtverfahren nach Anspruch 1, dadurch gekennzeichnet, daß das Zentrierstück (16) mit dem optischen Bauteil (4) über einen ersten Träger (13) verbunden ist und daß das Behältnis (14) für das härtbare Material (15) mit dem Halbleiterbauteil (2) über einen zweiten Träger (12) verbunden ist. ·

8. Ausrichtverfahren nach Anspruch 1, dadurch gekennzeichnet, daß das Halbleiterbauteil (23) eine Laserdiode, eine Elektrolumineszenzdiode oder eine Licht empfangende PIN-Diode ist.

9. Ausrichtverfahren nach Anspruch 1, dadurch gekennzeichnet, daß das optische Bauteil (4) eine Lichtleitfaser ist.

# FIG.1

# FIG.2

# FIG.3

## FIG. 4

## FIG. 5

## FIG. 6